# EUROPEAN PATENT APPLICATION

(11) **EP 3 644 400 A1**
(43) Date of publication of application: **29.04.2020**
(21) Application number: 19205511.9
(22) Date of filing: 25.10.2019
(51) Int. Cl.: H01M 2/10, H01M 10/42, H01M 16/00, H01M 2/20

(54) **LARGE-CAPACITY BATTERY SYSTEM FOR ELECTRICAL ENERGY STORAGE**

(30) Priority: 26.10.2018 CZ 20183553
(71) Applicant: Casava s.r.o., 15800 Praha 5 - Stodulky (CZ); Dukom s.r.o., 25601 Vaclavice (CZ); Power Communications s.r.o., 62700 Brno, Slaina (CZ)
(72) Inventor: JIRIKOVSKY, Petr, 12000 Praha 2 - Vinohrady (CZ); CHLISTOVSKY, Jan, 25601 Vaclavice (CZ)
(74) Representative: Kratochvil, Vaclav

(57) **Abstract**

The large-capacity battery system for electrical energy storage containing at least one block (1) with three unified shafts (2) provided with mechanical reductions (3) for insertion of different battery (4) types with different technologies, wherein the mechanical reduction (3) is provided with an intelligent electronic reduction containing information about the battery characteristics.

## Description

### Field of Invention

The invention relates to storage of batteries of a large-capacity battery system for electrical energy storage.

### Background of the Invention

Many systems and equipment are currently used for large-capacity storage of electrical energy. The systems are mostly delivered as large-size technology containers. These containers are not variable in terms of both capacity and space, require a dedicated area for container installation, cannot be located in buildings, electrical wiring must be intricately made during installation. During installation, crane technology must be involved and, in general, the equipment is difficult to handle.

Other disadvantages of current large-capacity battery systems include the impossibility of work with more batteries within one technology container. The boxes are always designed for one battery type defined by particular battery dimensions, i.e. their height, width, depth and the method of location of connecting points to the structure of container boxes. Another issue is the actual location of electric connectors for connecting of individual batteries into the whole battery system.

The lifetime of battery systems is planned for up to 15 to 20 years. Based on current technical solutions, a particular battery type, mostly from a particular manufacturer, must be utilized, which in a long-term perspective places demands on having spare batteries, precludes use of modern battery technologies, or alternatively involves demanding modifications for connecting and related higher operation and maintenance costs.

### Summary of the Invention

The above stated problems and deficiencies are solved to a large extent by the large-capacity modular battery system according to this invention. The modular large-capacity battery system itself combines two new approaches from the perspective of work with different battery types and dimensions.

The basis of the invention itself are the blocks with unified shafts where batteries are inserted to using a mechanical reduction. This enables inserting of different battery types from different suppliers having different technologies into the shaft. Already in the primary setting, the system will support at least three types of different batteries.

An intelligent electronic reduction containing information about battery characteristics forms a part of the mechanical reduction. The system automatically receives information about the battery type and its characteristics from the reduction after insertion. Subsequently, the system automatically connects particular inserted batteries, charges them to proper capacity and offsets the voltage. The voltage range can be from 150 V to 840 V. The system supports serial as well as parallel connection. No other settings are necessary in the system.

The advantage of the intelligent electronic reduction is also its simple installation and activation of the whole system, which does not require any special configuration and parameterization of the equipment. At the same time, specially trained staff is not needed.

Another advantage of the presented invention of a large-capacity modular battery systems is that it also enables combining of different battery technology types, i.e. lead-acid batteries, LiFePo4, Ni-Cd, NiMA, Li-Ion.

The large-capacity battery system itself can be extended by other modules, which increase the battery capacity (kWh) of the whole installation. The extension direction can be both horizontal and vertical. Thus, the battery system can have capacity ranging from 80 kWh to 3 MWh. The advantage is that neither special electricity supplies nor separate controlling buses are necessary. Only a new module with boxes for batteries or converters, which are connected inside the module by connectors, is added. Such modularity can be both vertical and horizontal. A part of the invention is an attaching mechanism, which enables the connection of particular modules as such.

An important advantage of this invention is the ability to operate the large-capacity battery system also indoors and to adapt to such premises. Another advantage is the option to extend the capacity of the large-capacity modular battery system by individual modules depending on client's needs for the total battery capacity (kWh).

This invention has a positive effect on ecology and environment cleanliness since some enable to use different battery types also with different age and different dimensions. It also enables to increase the exploitability of batteries as such as well as to extend their life cycle.

The equipment has minimum requirements for its maintenance due to its simple design. The equipment is modular and enables a rapid exchange of its respective components.

### Brief Description of the Drawings

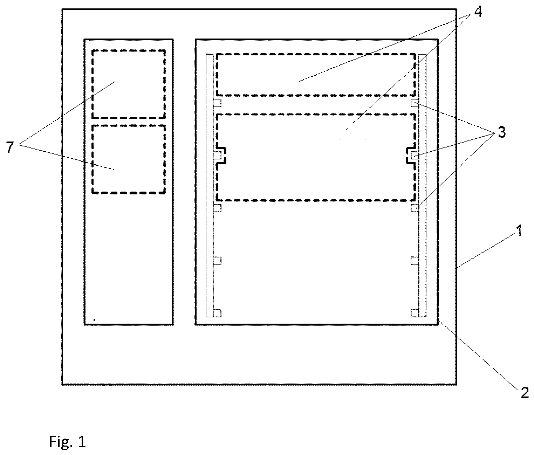

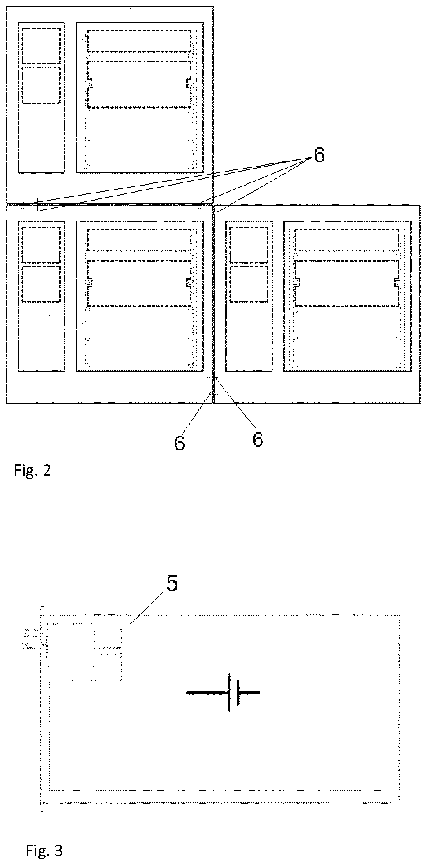

The invention of the modular large-capacity battery system is described in the attached drawings. Figure 1 shows a section of the large-capacity battery system and the method of placement of different types and dimensions of particular batteries is depicted. Figure 2 shows the view of horizontal scalability of the whole system. The modular large-capacity battery system can be extended by other modules, either vertically not horizontally. Individual modules are connected by special connectors ensuring connection to power supply and data connectivity. Figure 3 shows the mechanical and intelligent reductions for connection of different battery types.

### Examples of Invention Embodiments

The exemplary large-capacity battery system for electrical energy storage according to this invention consists of a block 1 with three unified shafts 2 provided with mechanical reductions 3 for insertion of different battery 4 types with different technologies, wherein the mechanical reduction 3 is provided with an intelligent electronic reduction containing information about the battery characteristics. The electronic reduction is connected with the system of series and/or parallel connection of powered batteries.

In another embodiment, the block 1 of the large-capacity battery system is provided with jig 6 for connection of other blocks 1 either horizontally or vertically.

The blocks 1 are provided with a tray 5 to prevent leakage of chemicals.

### Industrial Applicability

The large-capacity modular battery system finds use in many areas and fields. These are areas where energy storage for future use is required, elimination of peak electrical energy consumption must be addressed, and furthermore when dealing with energy company management. This issue relates to the energy sector, manufacturing companies of the automotive industry. The system may further be used in combination with photovoltaic systems to store surpluses of produced energy or as a supplement to the charging infrastructure of electric vehicles.

## Claims

1. A large-capacity battery system for electrical energy storage **characterized in that** it contains at least one block (1) with three unified shafts (2) provided with mechanical reductions (3) for insertion of different battery (4) types with different technologies, wherein the mechanical reduction (3) is provided with an intelligent electronic reduction containing information about the battery characteristics.

2. The large-capacity battery system according to claim 1 **characterized in that** the block is provided with jigs (6) for connection of other blocks both horizontally and vertically and at least one converter (7).

3. The large-capacity battery system according to claims 1 and 2 **characterized in that** the electronic reduction is connected with the system of a series and/or parallel connection of powered batteries.

4. The large-capacity battery system according to any of the preceding claims **characterized in that** the blocks are provided with a tray (5) to prevent leakage of chemicals.
